# EUROPEAN PATENT SPECIFICATION

(11) **EP 2 596 701 B1**
(45) Date of publication and mention of the grant of the patent: **20.05.2015**
(21) Application number: 11192400.7
(22) Date of filing: 07.12.2011
(51) Int. Cl.: A01N 31/06, A01N 63/02, A01P 17/00

(54) **Control of oviposition from insects**
Kontrolle der Eiablage von Insekten
Contrôle de l'oviposition d'insectes

(30) Priority: 25.11.2011 EP 11190815
(43) Date of publication of application: 29.05.2013
(73) Proprietor: Bioskiva AS, 7140 Opphaug (NO)
(72) Inventor: Lilleengen, Svein, 7140 Opphaug (NO)
(74) Representative: DREISS Patentanwälte PartG mbB

(56) References cited:
- WO-A1-2010/033670
- US-A1- 2003 198 659
- TAKAHIRO OGURA ET AL: "2-methylisoborneol and geosmin, the main sources of soil odor, inhibit the germination of brassicaceae seeds", SOIL SCIENCE AND PLANT NUTRITION, vol. 46, no. 1, 1 March 2000 (2000-03-01), pages 217-227, XP55018947, ISSN: 0038-0768, DOI: 10.1080/00380768.2000.10408777

## Description

### Field of the Invention

The present invention relates to the control of egg deposition from insects, especially cabbage fly

### Background of the Invention

The cabbage fly (Delia radicum) is a common pest occurring all over Europe, affecting most brassicas including cabbages, cauliflowers, broccoli, Brussels sprouts, kale, swedes and turnips.

In Norway, cabbage fly lays eggs twice times during the summer period (June and July) at approximately a 5 weeks interval. They hatch into white maggots after about six days and the larvae feed for about three weeks on the roots and stems of the cabbage plants.

It is known, to use cyanobacteria to function as a repellent producing system. In "BIOSKIVA - A Carrier for Cyanobacteria and Cabbage Fly Repellents" from Svein Lilleengen, 3rd Symposium on microalgae and Seaweed Products in Agriculture, 21-23 June 2006, Mosonmogyarvar - Hungary describes the BIOSKIVA, fibers of fermented manure in a disc shape, as a carrier for cyanobacteria and the effect on cabbage root fly. The cyanobacteria described there were used as a reproducing living biofilm on the BIOSKIVA.

### Summary of the Invention

One of the ideas leading to the invention is to develop a combined smell-free solid insect repellent fertilizer for the organic farming of cabbage and other crops of the brassica family (i.e. cabbage, cauliflower, broccoli, Brussels sprouts or kale). The invention increases farmer's crop yield by stimulating the cabbage growth and reducing crop losses by the cabbage root fly, a common pest.

The problem is to be solved by the so called EcoBug pellets and the corresponding production technologies. The whole EcoBug production chain comprises three separate processes.

A first process where animal farmers add value to a waste product by producing energy (biogas) and nutrients (organic, mineral and liquid) via anaerobic digestion/fermentation of manure in a bioreactor achieved as digester.

In a second process, algal farmers produce cyanobacteria (blue algae) flakes as insect repellent biomass via industrial mass production of selected cyanobacteria strains in a photobioreactor and subsequent drying into flakes.

According to the present invention the proper cyanobacteria with repellent properties, are Pseudoanabaena spec. and Nostoc spec. They produce chemical substances as (-) - geosmin and (-)-2-methylisoborneol in effectual amounts. So that the dried and ground cyanobacteria containing these two substances have a repellent effect on cabbage fly.

A selection of the cultivation parameters as they are growth medium, airflow rate, optimal temperatures between 20 °C and 23 °C, an optimal light intensity at 5-8 µE g DW-1 s-1 nutrients as nitrate feeding up to 1000 mg nitrate / L, phosphate feeding up to 100 mg phosphate / L and optimal pH between 7,3 and 7,5 adjusted by adding CO2 to the airflow in increasing amounts, depending on aeration rate, temperature and growth rate, leads to an maximum production of the substances with the repellent effect.

The products of the first process and the second process were finally used by agricultural suppliers to produce EcoBug pellets - a combined insect repellent fertilizer - by mixing organic and mineral nutrients with small amounts of cyanobacteria powder (0.1 % to 1%), pelletizing the mixture via extrusion technologies and applying different coatings to slow down the nutrients release and extent the repellent function.

Animal farmers, algal farmers and EcoBug pellet producers can be locally separated or combined at one facility or semi-combined.

The concept is developed for organic farming and organic production, but it is also applicable for conventional farming and production.

### Drawing

- Figure 1: schematically illustrating the steps of a first process
- Figure 2: schematically illustrating the steps of a second process
- Figure 3: schematically illustrating the steps of producing EcoBug pellets

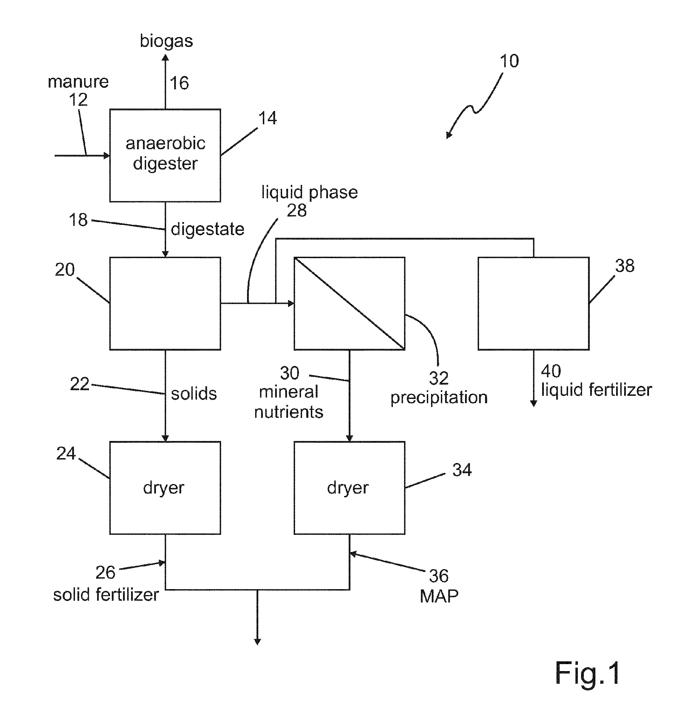

Figure 1 showing a flow sheet of a first process 10 to produce a fertilizer. A raw material 12 for the fertilizer is manure. The source has to be from ecological farming in order to provide the raw material 12 of suitable quality, but it is also possible to use manure from conventional farming. The raw material could be collected from one big farm or from several small farms. The origin of the manure can be from pig, cow and/or chicken or from any other kind of farm animal according to the level of nutrients which is achieved in the fertilizer. Green material or food rests can also be added to the raw material 12.

Raw material 12 is shredded before its addition to an anaerobic digester 14. During a known process in the digester 14 several reactions take place, hydrolysis, acidogenisis, acetogenisis and methanogenisis, depending on the conditions and the active bacteria present. Carbohydrates, fats and proteins are broken down to produce a biogas 16 containing CO₂ and methane. The methane is recovered to produce energy from it.

After 14 to 20 days the reaction is completed. A digestate 18 goes through a solid-liquid separation 20, possibly a clarifier followed by a filter press. A solid residue 22, containing organic nutrients and fibres goes through a drying process 24. The drying process 24 uses possibly a steam dryer at a temperature of at least 120 °C for 30 minutes, wherein the digestate 18 is dried to a level of 10% to 15% moisture. This dried solid residue is a solid fertilizer 26. If the solid fertilizer 26 contains particles above 1 mm, they will need to be ground before used in a next process step.

A liquid phase 28 recovered from step 20 can be treated in two different routes.

A first route is to precipitate mineral nutrients 30 in a step 32, and then drying the precipitated mineral nutrients 30 in a step 34. A product 36 is also known as magnesium ammonium phosphate, MAP or Struvite. This product 36 is shipped directly to the customer or mixed with the dried solid fertilizer 26 to improve quality.

A second route is to stabilise the liquid phase 28 in a step 38. The stabilised liquid phase is called liquid nutrient and is sold to the market as a liquid fertilizer 40.

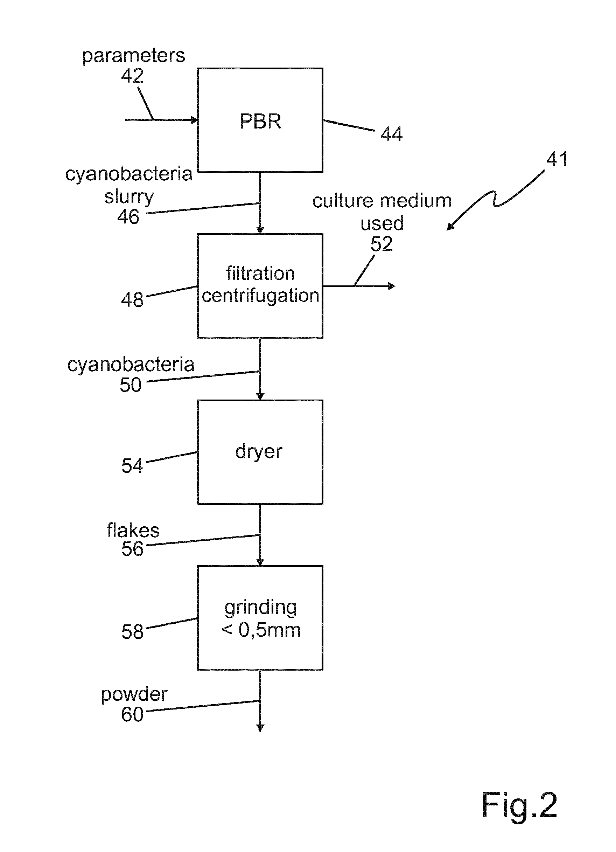

Figure 2 shows a second process 41. Only few strains of cyanobacteria have been identified as having a desired repelling effect on the cabbage fly. These are for example Psedoanabaena NIVA CYA 3 or *Nostoc* sp. MACC 661. The repelling effect is explained by two substances produced by these few strains. The fist substance is (-)-geosmin and the second substance is (-)-2-methylisoborneol. Cultivation parameters 42 of a photobioreactor 44 have to be adapted specifically for each strain. The cultivation parameters 42 containing special pH-conditions, light conditions and nutrient combinations are essential to the survival and growth of the cyanobacteria filaments in the photobioreactor 44. Particularly an amount of the repellent produced by the cyanobacteria depends on the cultivation parameters 42. For further steps it is desired that the cyanobacteria excrete only small amounts of the repellent into a surrounding medium, so that most of them is intracellular bound.

Upon harvesting the photobioreactor, slurry 46 is filtered in step 48 to separate the cyanobacteria 50 from the surrounding fluid 52.

In a next step 54, the cyanobacteria 50 are dried, for example in a steam dryer. Flakes 56 of cyanobacteria, with moisture content of 5% to 10% are leaving the steam dryer.

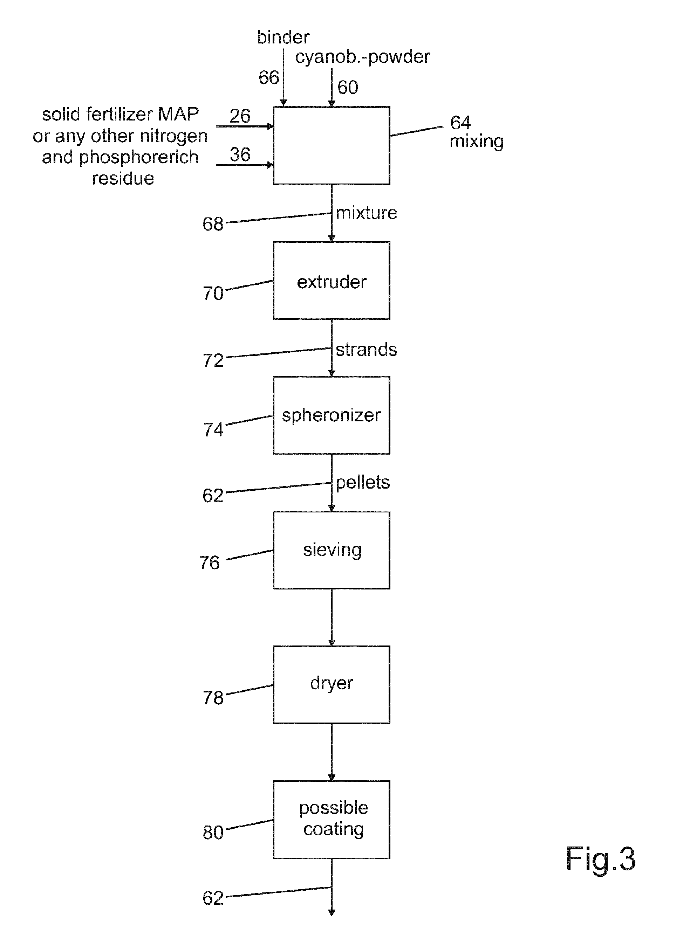

For further processing it is necessary to ground the flakes 56 in a step 58 to a particle size smaller than 0.5 mm. This powder 60 is used to produce the so called EcoBug pellets 62 with a required cyanobacteria concentration from 0.1% to 0.3% dry weight basis as shown in next figure 3.

Figure 3 shows the production process of the EcoBug pellets 62. In a Step 64 the solid fertilizer 26, the liquid fertilizer 36, both products of the first process 10 shown in Figure 1 and the powder 60, product of the second process 41, are mixed carefully together with a binder 66. Possible binders 66 are pea starch, glycerol, hydroflor etc... Its content can vary from 3% to 10% of total weight dry basis. Water is added to step 64 to achieve 50% moisture content.

A mixture 68 leaving step 64 is then sent to an extruder 70. The extruder forms the mixture 68 to strands 72 with a diameter of 0.5 mm. The strands 72 are directed to a spheronizer 74 where the strands 72 are shaped into pellets 62. The pellets are sieved in a following step 76 so that only pellets with a diameter between 2 mm and 4 mm remain. The remaining pellets are dried in a drying step 78. Pellets with diameters below 2 mm an over 4 mm are reprocessed to increase the yield. The drying step 78 should be made in such a way the active ingredients, the cyanobacteria enclosing (-)-geosmin and (-)-2-methylisoborneol, are not destroyed.

If it is needed for handling and to limit dusting, it is possible to add a coating 80 to the pellets 62.

The coating 80 has also the purpose of restraining the release of the active ingredients enclosed in the cyanobacteria. The EcoBug pellets 62 are bagged and sent to the customers.

The EcoBug pellets 62 will be brought out with the seeds, or, when the small brassica plants are planted in the field 8often done in the Nordic countries with a short summer). Biological degradation will set free the active ingredients (-)-geosmin and (-)-2-methylisoborneol time delayed so that the active ingredients are available at the same time when cabbage fly will lay eggs.

It is also possible to form discs with various diameters of the mixture 68. The discs are placed around the stems of culture plants.

## Claims

1. A combined insect repellent fertilizer for controlling an oviposition of a cabbage fly, ,
wherein the combined insect repellent fertilizer is produced out of at least:
a solid fertilizer (26), wherein the solid fertilizer (26) contains fermented farm animal manure (12),
a cyanobacteria powder (60) and
a binder (66),
wherein the cyanobacteria powder (60) comprises dried Psedoanabeana NIVA CYA 3 or Nostoc sp. MACC 661.

2. The combined insect repellent fertilizer according to claim 1, wherein the cyanobacteria Psedoanabeana NIVA CYA 3 or Nostoc sp. MACC 661 comprise the repellent intracellular bound.

3. The combined insect repellent fertilizer according to claim 1 or 2, wherein the repellent is (-)-geosemin and/or (-) - 2-methylisoborneol.

4. The combined insect repellent fertilizer according to any of the preceding claims, wherein the combined insect repellent fertilizer is formed to pellets (62).

5. The combined insect repellent fertilizer according to the preceding claim, wherein the pellets (26) are coated.

6. The combined insect repellent fertilizer according to one of the claims 1 to 3, wherein the combined insect repellent fertilizer is formed to disks.

## Patentansprüche

1. Kombiniertes Insektenschutz-Düngemittel zur Bekämpfung einer Eiablage der kleinen Kohlfliege,
wobei das kombinierte Insektenschutz-Düngemittel hergestellt wird mindestens aus:
einem festen Düngemittel (26), wobei das feste Düngemittel (26) fermentierten Nutztierdung (12) enthält,
einem Cyanobakterienpulver (60) und
einem Bindemittel (66),
wobei das Cyanobakterienpulver (60) getrocknete Psedoanabeana NIVA CYA 3 oder Nostop sp. MACC 661 enthält.

2. Kombiniertes Insektenschutz-Düngemittel nach Anspruch 1, wobei die Cyanobakterien Psedoanabeana NIVA CYA 3 oder Nostop sp. MACC 661 das Schutzmittel intrazellulär gebunden enthalten.

3. Kombiniertes Insektenschutz-Düngemittel nach Anspruch 1 oder 2, wobei das Schutzmittel (-)-Geosemin und/oder (-)-2-Methylisoborneol ist.

4. Kombiniertes Insektenschutz-Düngemittel nach einem der vorhergehenden Ansprüche, wobei das kombinierte Insektenschutz-Düngemittel zu Pellets (62) geformt ist.

5. Kombiniertes Insektenschutz-Düngemittel nach dem vorhergehenden Anspruch, wobei die Pellets (26) beschichtet sind.

6. Kombiniertes Insektenschutz-Düngemittel nach einem der Ansprüche 1 bis 3, wobei das kombinierte Insektenschutz-Düngemittel zu Scheiben geformt ist.

## Revendications

1. Engrais insectifuge combiné pour lutter contre la ponte d'une mouche du chou,
l'engrais insectifuge combiné étant produit à partir d'au moins:
un engrais solide (26), l'engrais solide (26) contenant du fumier d'animaux de ferme fermenté (12), une poudre de cyanobactéries (60) et
un liant (66),
la poudre de cyanobactéries (60) comprenant Psedoanabeana NIVA CYA 3 séché ou Nostoc sp. MACC 661.

2. Engrais insectifuge combiné selon la revendication 1, les cyanobactéries Psedoanabeana NIVA CYA 3 ou Nostoc sp. MACC 661 comprenant l'insectifuge lié.

3. Engrais insectifuge combiné selon la revendication 1 ou 2, l'insectifuge étant la (-)-géosémine et/ou le (-)-2-méthylisobornéol.

4. Engrais insectifuge combiné selon l'une quelconque des revendications précédentes, l'engrais insectifuge combiné étant formé de granules (62).

5. Engrais insectifuge combiné selon l'une quelconque des revendications précédentes, les granules (26) étant enrobés.

6. Engrais insectifuge combiné selon l'une des revendications 1 à 3, l'engrais insectifuge combiné étant formé en disques.
